# EUROPÄISCHE PATENTSCHRIFT

(11) **EP 1 196 703 B1**
(45) Veröffentlichungstag und Bekanntmachung des Hinweises auf die Patenterteilung: **18.02.2004**
(21) Anmeldenummer: 01949323.8
(22) Anmeldetag: 09.05.2001
(51) Int. Cl.: F16J 15/04, F16L 19/02, F16L 23/16

(54) **ABDICHTUNG FÜR MEDIENFÜHRENDE TEILE**
SEAL FOR MEDIUM-CONDUCTING COMPONENTS
JOINT POUR COMPOSANTS CONDUCTEURS DE MILIEUX

(30) Priorität: 10.05.2000 DE 10022515
(43) Veröffentlichungstag der Anmeldung: 17.04.2002
(73) Patentinhaber: Neumo GmbH + CO. KG, 75438 Knittlingen (DE)
(72) Erfinder: JOST, Harry, 75438 Knittlingen (DE)
(74) Vertreter: Patentanwälte Ruff, Wilhelm, Beier, Dauster & Partner
(86) Internationale Anmeldenummer: PCT/EP2001/005233
(87) Internationale Veröffentlichungsnummer: WO 2001/086177

(56) Entgegenhaltungen:
- DE-C- 828 175
- FR-A- 1 599 688
- GB-A- 487 796
- US-A- 2 027 176

## Beschreibung

### ANWENDUNGSGEBIET UND STAND DER TECHNIK

Die Erfindung betrifft eine Abdichtung für medienführende Teile nach dem Oberbegriff des Anspruches 1.

Um den gestiegenen Anforderungen an Hygiene und Produktqualität - wie z.B. Reduzierung von Konservierungsstoffen in kosmetischen Produkten und Nahrungsmitteln, Steigerung der Haltbarkeit von Milchprodukten und Getränken sowie in der pharmazeutischen Industrie oder anderen Industrien, in denen die GMP (Good Manufacturing Practice) - Voraussetzungen gefordert werden - zu genügen, sind entsprechende Anlagen, Komponenten und Bauteile erforderlich, die die Anforderungen an Keimarmut und Sterilität erfüllen.

Dabei hat sich gezeigt, daß vor allem die Abdichtung der Bauteile o. dgl. ein neuralgischer Punkt solcher Prozesse ist. Aufgrund von Alterungserscheinungen, äußeren Einflüssen, wie Temperatur, Angriff durch aggressive Medien, werden die Dichtungen oft derart in Mitleidenschaft gezogen, daß am Dichtbereich zwischen den Bauteilen Toträume, Spalte o. dgl. entstehen, die potentielle Kontaminationsquellen sind, so daß sich dort Keime, Bakterien oder ähnliches anlagern können. So ist insbesondere die Art der Dichtung kritisch. Während einerseits eine Profildichtung diskutiert wird, favorisieren andere Anwender eine Abdichtung mittels O-Ring.

Die FR 1 599 688 zeigt eine Dichtung nach dem Oberbegriff des Anspruchs 1. Dort werden die beiden gegeneinander abzudichtenden Teile im Bereich des Medienraums unmittelbar gegeneinander gepresst, wobei die Kontaktfläche im wesentlichen geradlinig ist oder, bei einer nicht spaltfreien Dichtung, aus nicht kongruenten Kanten und Ausnehmungen besteht.

Die GB 487 796 zeigt eine Rohrverschraubung, bei der die Dichtflächen aus einem in Rohrachsrichtung weisenden dreiecksförmigen Ringwulst und einer entsprechenden Nut bestehen, die jeweils andere Flankenwinkel haben.

### AUFGABE UND LÖSUNG

Die Aufgabe der Erfindung ist es, eine lösbare Abdichtung für medienführende Teile zu schaffen, die sich von herkömmlichen Dichtungen dadurch abhebt, daß sie eine bessere Dichtwirkung besitzt und somit vor allem den stetig steigenden Anforderungen bei keimarmen oder sterilen Prozessen gerecht wird.

Diese Aufgabe wird durch die Merkmale des Anspruchs 1 gelöst. Weiterbildungen der Erfindung sind Gegenstand der Unteransprüche.

Im Gegensatz zu herkömmlichen Dichtungen kommt die erfindungsgemäße Abdichtung also ohne zusätzliches Dichtelement, wie Dichtring o. dgl. aus. Vorzugsweise ist sie eine reine "Metall auf Metall-Dichtung" aus gleichem Grundwerkstoff, deren Dichtwirkung durch die charakteristisch ausgebildeten Dichtflächen an beiden Teilen zustande kommt, wenn die Teile gegeneinander gespannt werden. Eine Oberflächenbehandlung oder Beschichtung ist nicht zwingend notwendig, aber möglich. Dabei wirken die zueinander komplementären Dichtflächen wie ein Stempel und eine Matritze, die ineinandergreifen. Im Gegensatz zu herkömmlichen Dichtungen, bei denen sich aufgrund der Materialstärke des Dichtelementes stets ein Spalt zum Medienraum hin bildet, ist die Dichtung beim erfindungsgemäßen Verfahren spaltfrei. Insbesondere diese Dichtspalte an herkömmlichen Dichtungen sind potentielle Kontaminationsquellen, da sich das Dichtelement durch den Spalt in den Medienraum hineinverformen kann und dort einen wulstartigen Vorsprung bildet, an dem sich beispielsweise beim Entleeren von medienführenden Rohrleitungen Rückstände in Form von Pfützen bilden können, die ein idealer Nährboden für Bakterien oder Keime sind. Dieses Problem ist durch die spaltlose Dichtung der erfindungsgemäßen Verbindung gelöst. Generell sind die Dichtelemente herkömmlicher Dichtungen Fremdkörper, die sich ganz anders verhalten, als die restlichen medienführenden Teile. Sie sind beispielsweise permanent dem Medium, beispielsweise Gasen oder Flüssigkeiten, ausgesetzt und können dadurch angegriffen werden oder aufquellen, was zu einer Verminderung der Dichtwirkung führt. Auch sind sie ständig Temperaturwechseln ausgesetzt, beispielsweise wenn die Anlage dampfsterilisiert wird. Beispielsweise sind herkömmliche Dichtringe nur bis ca. 135° in keimarmen oder sterilen Prozessen zugelassen. Beim erfindunggemäßen Verfahren hingegen wird die Dichtung durch die medienführenden Teile selbst gebildet, ein Aufquellen o. dgl. ist somit nicht möglich.

Ein weiterer Vorteil der Abdichtung, die keine Elastomer-Dichtungen benötigt, ist, daß bei einer Wärme-Sterilisation die Dichtung nicht als Isolator wirkt und die Sterilisationswärme in kürzester Zeit alle notwendigen Bereiche durch Wärmeleitung erreicht.

Als medienführende Teile im Sinne der Anmeldung werden alle mit Medien, wie Flüssigkeiten oder Gasen in Kontakt stehende oder medientransportierende Vorrichtungen, wie Rohre, Behälter, Formstücke, Ventile o. dgl., verstanden. Als Verbindungen für medienführende Teile werden demnach Verbindungen zwischen Rohren, Behältern o. dgl. verstanden. Die Abdichtung kann eine Anschluß-Verbindung zwischen zwei Rohren, einem Rohr und einem Behälter oder dgl. sein. Solche Verbindungen können Schraub-, Flansch-, Klemm- bzw. Clampverbindungen oder dgl. sein. Es ist jedoch auch möglich, die Abdichtung bei Ventilen oder dgl. einzusetzen, beispielsweise als Ventilgehäuseabdichtung und/oder als Spindelabdichtung.

Die Kontaktfläche zwischen den Dichtflächen der Teile beschränkt sich auf einem Bereich, dessen Abmessung im Vergleich zur Nennweite der Abdichtung sehr gering ist. Die Nennweite ist dabei der Innendurchmessers des Medienraums der Abdichtung in Millimeter, der durch die Medienraumwandung begrenzt ist. Die Breite der Kontaktfläche ist kleiner als ein Fünfzigstel der Nennweite, insbesondere 1 mm. Sie kann auch ein Fünftausendstel bis zu dem Fünfzigstel, vorzugsweise ein Tausendstel bis ein Zweihundertfünfzigstel der Nennweite der Abdichtung betragen also beispielsweise 0,01 mm bis zu dem einen mm, vorzugsweise 0,05 mm bis 0,2 mm. Dieser Bereich grenzt unmittelbar an den Medienraum an, die Dichtwirkung der Dichtung beginnt also direkt am Übergang zwischen Kontaktfläche und Medienraum.

Aufgrund der geringen Abmessung der Kontaktfläche liegt der spezifische Dichtdruck beim Verpressen der Teile vorzugsweise im Bereich der elastischen Verformung des Materials der Teile. Er kann nahe der Streckgrenze (0,2 %-Dehngrenze) des Materials der Teile liegen, beispielsweise 20 % bis 80 % des Wertes der Streckgrenze betragen. Der Wert des Dichtdruckes kann ca. 30 bis 140 Newton pro mm² betragen. Auch bei einem hohen Kontaktdruck kommt es zu keiner Kaltverschweißung der Teile. Gewisse plastische Verformungen, z.B. in Teilen der Oberflächen, sind dagegen möglich.

Bei einer Weiterbildung der Erfindung können die Dichtflächen eine Führung aufweisen, die quer zum Medienraum, also beispielsweise in radialer Richtung, wirksam ist. Als Führung, insbesondere in radialer Richtung, dienen vorzugsweise die profilierten Dichtflächen der Teile. Dazu weisen die Querschnitte der Dichtflächen bevorzugt ein zueinander komplementär gekrümmtes Profil auf. Die Profile können beispielsweise als eine Art Wulst und Nut ausgebildet sein und weisen zwei komplementäre, beim Spannen der Teile ineinandergreifende S-förmige Profile auf. Auch ineinandergreifende trapezförmige Profile sind möglich. Die Dichtflächen können somit eine Art Ringkalotten-Dichtung bilden.

Bei einer Weiterbildung der Erfindung können die Dichtflächen so gestaltet sein, daß der spezifische Dichtdruck von der Schnittlinie der Dichtfuge mit der Wandung des Medienraums aus abnimmt. Dadurch kann verhindert werden, daß die Dichtfuge an dieser Schnittlinie "aufschnäbelt" und es zur Bildung eines Spaltes kommt, in dem sich Keime oder Bakterien sammeln könnten. Durch die nachstellbare Kontur der Dichtflächen ist es möglich die Teile auszutauschen ohne daß es zu Undichtigkeiten kommt. Insbesondere führt auch eine Addition von Toleranzen in den Abmessungen der Dichtflächen nicht zu Undichtigkeiten. Die Dichtfuge ist stets direkt an ihrer Schnittlinie mit dem Medienraum dicht. Die Dichtflächen sind dabei als eine Art Dichtlippe und eine dazu komplementäre Halb-Ausnehmung ausgebildet.

An die Kontaktfläche, die durch die beiden Dichtflächen gebildet wird, können Flächenabschnitte beider Teile angrenzen, die von der Kontaktfläche freigeschnitten sind, also beim Spannen der Teile nicht auf Anschlag liegen. Diese können aber als Reserve-Kontaktflächen dienen, wenn die Kontaktfläche sich unter dem Dichtdruck in Richtung von dem Medienraum weg vergrößert. Dementsprechend sollte sich der Freischnitt von der Kontaktfläche weg allmählich vergrößern. Diese Flächenabschnitte sind vorzugsweise ebenfalls komplementär zueinander ausgebildet. Sie können in zwei planparallele Flächen übergehen, bevorzugt sind sie jedoch ebenfalls gekrümmt und bilden vorzugsweise einen Ringspalt. Die Spaltbreite des Ringspaltes kann beispielsweise ein Fünftausendstel bis ein Fünfhundertstel, insbesondere drei Fünftausendstel bis sieben Fünftausendstel der Nennweite der Abdichtung betragen.

Bei einer Weiterbildung der Erfindung können quer im Abstand von den Dichtflächen Führungsabschnitte zur Vorzentrierung der beiden Teile vorgesehen sein. Die Führungsabschnitte können beispielsweise axial verlaufende Führungsflächen sein. An die beiden Führungsabschnitte, insbesondere am Übergang der Führungsabschnitte in die Flächenbereiche, die die Reservekontaktflächen bilden und an einem dazu gegenüberliegenden Ende können diese Führungsabschnitte Einführschrägen aufweisen, die zum Zusammenführen der beiden Teile dienen. Die Einführschrägen können beispielsweise durch Anfassungen gebildet werden. Zwischen den beiden Führungsabschnitten besteht vorzugsweise ein Führungsspalt, beispielsweise eine axiale Trennfuge, die es erlaubt, daß sich die beiden Teile beim Gegeneinanderpressen der Dichtflächen zueinander paßgenau ausrichten können.

Besonders bevorzugt ist die Abmessung der Kontaktfläche, insbesondere die an den Medienraum angrenzende Dichtlippe mit ihrer komplementär ausgebildeten Halbausnehmung, derart bemessen, daß die Dichtfase am Übergang zur Medienraumwandung mit dieser vorsprungsfrei fluchtet. Durch die spaltfreie Dichtung zwischen fluchtenden Wandabschnitten ist eine lösbare Verbindung möglich, deren Dichtfuge im Medienraum kaum sichtbar oder fühlbar ist. Außer idealen Verhältnissen für geringen Leitungswiderstand ist auch eine rückstandsfreie Reinigung und Entleerung möglich.

Bei einer Weiterbildung der Erfindung ist zwischen den Teilen in Spannrichtung ein Spalt ausgebildet. Der Spalt ist insbesondere so groß, daß bei einem Anspannen der Abdichtung bis zum Schließen des Spaltes der Dichtdruck durch elastische Verformung der Teile aufgebaut wird. Die Spaltbreite kann dabei ca. ein Fünftausendstel bis ein Hundertstel, vorzugsweise ein Hundertstel bis drei Hundertstel der Nennweite der Abdichtung betragen. Dazu kann zwischen der Dichtfläche und einer die Verspannung der Teile bewirkenden Spanneinrichtung, beispielsweise Spannschrauben, Klemmen o. dgl., ein Abschnitt der Teile, beispielsweise ein ring- oder rohrförmiger Vorsprung vorgesehen sein, der elastisch verformbar ist. Die Voreinstellung des Kontaktdruckes wird also im wesentlichen durch die Größe des Spaltes, die Länge des Vorsprunges, den Elastizitätsmodul des Materials und die Biegsamkeit der Teile bestimmt.

Die Abdichtung kann auch eine Flanschververbindung sein, bei der der Kontaktdruck durch Verschrauben der Flansche erzeugt wird. Als AnschlußVerbindungen ausgebildete Abdichtungen werden vorzugsweise in eine Rohrleitung bzw. an einen Behälter angeschweißt. Dabei eignet sich insbesondere das Orbitalschweißen. Die Schweißstelle ist dabei vorzugsweise ca. 35 mm bis 50 mm von den Dichtflächen der Abdichtung entfernt. Dies reicht aus, um eine Temperaturverformung an den Dichtflächen zu verhindern. Außerdem hemmt der relativ große Durchmesser und die relativ hohe Wärmekapazität als Flansch eine Wärmeleitung zur Dichtfläche hin. Insbesondere für Edelstahl-Abdichtungen ist die Wärmeleitung von der Schweißstelle weg in Richtung Dichtflächen gering, da der Edelstahl praktisch als Isolator wirkt.

Die spaltfreie Dichtung kann zur Verbindung zweier Rohr- bzw. Behälterteile eingesetzt werden. Sie kann jedoch auch zur Abdichtung von Ventil-Bauteilen, beispielsweise zur Abdichtung eines Ventilmetallbalges eingesetzt werden.

Die Teile, die die Abdichtung und die Dichtflächen bilden, können aus einem harten Material, z.B. rostfreiem Stahl, bestehen. Es sind aber auch andere Materialien geeignet, aus denen auch die gesamten Teile hergestellt sein können, z.B. Kunststoffe oder Keramik.

Die Erfindung umfaßt weiterhin ein Verfahren zur Herstellung einer Abdichtung nach einem der Ansprüche 1 bis 16. Das Verfahren zeichnet sich dadurch aus, daß die Dichtflächen durch Profilfeindrehen mittels zueinander komplementärer Profilschneiden hergestellt werden können. Dabei können auch die Reservedichtflächen gleichzeitig mit den gleichen Profilschneiden hergestellt werden. Als Drehverfahren kann beispielsweise das Plandrehen verwendet werden, bei dem eine senkrecht zur Drehachse des Werkstückes liegende Fläche bearbeitet werden kann.

Kunststoff-Abdichtungen werden vorzugsweise durch Spritzgießen hergestellt. Die relativ kleinen Dichtflächen können entweder durch den Einsatz von Feinspritzgießverfahren gleich mit angespritzt werden oder durch Feinbearbeiten nachträglich ausgebildet werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ein Ausführungsbeispiel der Erfindung ist in den Zeichnungen dargestellt und wird im folgenden näher erläutert. In den Zeichnungen zeigen:
- Fig. 1: eine teilweise geschnittene Ansicht durch die Verbindung;
- Fig. 2: einen Längsschnitt durch ein erstes Teil der Verbindung;
- Fig. 3: eine vergrößerte Darstellung der Einzelheit X von Fig. 2;
- Fig. 4: einen Längsschnitt durch ein zweites Teil der Verbindung;
- Fig. 5: eine vergrößerte Darstellung der Einzelheit Z von Fig. 4 und
- Fig. 6: eine teilweise geschnittene Darstellung der Einzelheiten X von Fig. 1 und Z
von Fig. 3 bei zusammengefügten Teilen der Verbindung.

### DETAILLIERTE BESCHREIBUNG DER AUSFÜHRUNGSBEISPIELE

Die erfindungsgemäße Abdichtung soll beispielhaft anhand einer Verschraubung 11 erläutert werden. Es sind jedoch andere Abdichtungs-Arten möglich, beispielsweise Flansch-, Klemm- bzw. Clampabdichtungen.

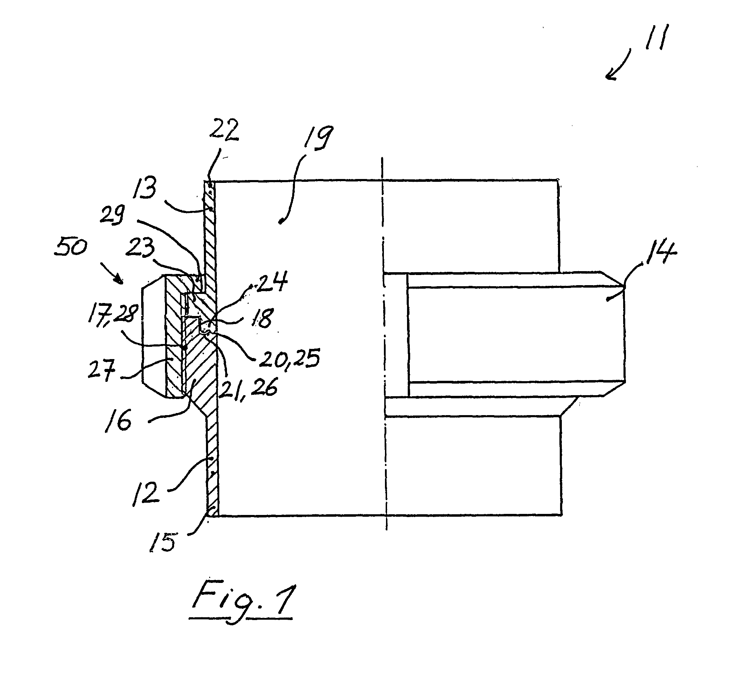

Die Fig. 1 zeigt eine Verschraubung 11, wie sie insbesondere zur lösbaren Verbindung zweier Rohre eingesetzt wird. Die Verschraubung 11 besteht aus drei Teilen: einem Gewindestutzen 12, einem Bundstutzen 13 und einer Spanneinrichtung 50 in Form einer Überwurfmutter 14. Gewindestutzen 12, Bundstutzen 13 und Überwurfmutter 14 sind vorzugsweise aus rostfreiem Stahl, beispielsweise aus einem Chrom-Nickel-Molybdän-Stahl hergestellt. Es können beispielsweise austenitische Chrom-Nickel-Molybdän-Stähle der Werkstoffnummern 1.4404 oder 1.4435 mit einer 0,2%-Dehngrenze (R_{P0,2}) bei 50°C von 182 mm² eingesetzt werden. Die gängigen Nennweiten derartiger Abdichtungen liegen im Bereich von 6 mm bis 100 mm (DN 6 bis DN 100). Die Abdichtungen sind üblicherweise für Betriebsdrücke von bis zu 60 bar ausgelegt. In Abhängigkeit von den Durchmessern können sie auch für wesentlich höhere Drücke angelegt werden. Die Oberflächen der Abdichtungen sind für Cleaning-In-Place (CIP) -Reinigung und die Sterilisation-In-Place (SIP) -Sterilisierung geeignet.

Der Gewindestutzen 12 besteht aus einem Rohrabschnitt 15, an dem sich ein im Durchmesser größerer Gewindeabschnitt 16 anschließt. Der Rohrabschnitt 15 wird an ein Rohr (nicht dargestellt) angeschweißt. Als Schweißverfahren hat sich dabei insbesondere das Orbitalschweißen als für sterile oder keimarme Prozesse geeignet erwiesen. Der Übergang zwischen Gewinde-abschnitt 16 und Rohrabschnitt 15 ist konisch gerundet ausgebildet. Der Gewindeabschnitt 16 weist ein Außengewinde 17 auf, das vom Übergang zwischen Rohrabschnitt 15 und Gewin-deabschnitt 16 bis zum Ende des Gewindeabschnittes 16 reicht. Am gewindeabschnittseitigen Ende des Gewindestutzens 12 ist ein radial umlaufender Einschnitt 18 ausgebildet, der zum Medienraum 19, also dem Rohrinneren, hin weist. Am Fuß des Einschnittes 18 sind die Dichtflächen 20 und die Reservedichtflächen 21 des Gewindestutzens ausgebildet (Fig. 6).

Der Bundstutzen 13 weist ebenfalls einen Rohrabschnitt 22 und darüber hinaus einen Flanschabschnitt 23 auf. Der Rohrabschnitt 23 des Bundstutzens wird ebenfalls an ein Rohr (nicht dargestellt) angeschweißt. Der Flanschabschnitt 23 ist eine stufenförmige Erweiterung an der Außenfläche des Rohrabschnittes 22. Der Flanschabschnitt 23 weist am flanschseitigen Ende des Bundstutzens einen radial umlaufenden, ringförmigen Vorsprung 24 auf. An der Stirnseite des Vorsprunges 24 ist die Dichtfläche 25 und die Reserve-Dichtfläche 26 des Bundstutzens ausgebildet.

Die Spanneinrichtung 50 zur Verbindung der Teile ist im Ausführungsbeispiel eine Überwurfmutter 14. Sie dient zur Verspannung von Gewinde und Bundstutzen 12, 13. Sie weist einen Gewindeabschnitt 27 mit einem Innengewinde 28, sowie einen Anschlagbund 29 zur Fixierung der Überwurfmutter 14 am Bundstutzen 13 auf. Das Innengewinde 28 hat eine Hartmetallbeschichtung, um das Fressen beim Verschrauben der Überwurfmutter 14 mit dem Gewindestutzen 12 zu verhindern. Statt der Gewinde-Spanneinrichtung können auch Flansche mit Spannbolzen, Spannklammern, hydraulische Spanneinrichtungen o. dgl. verwendet werden.

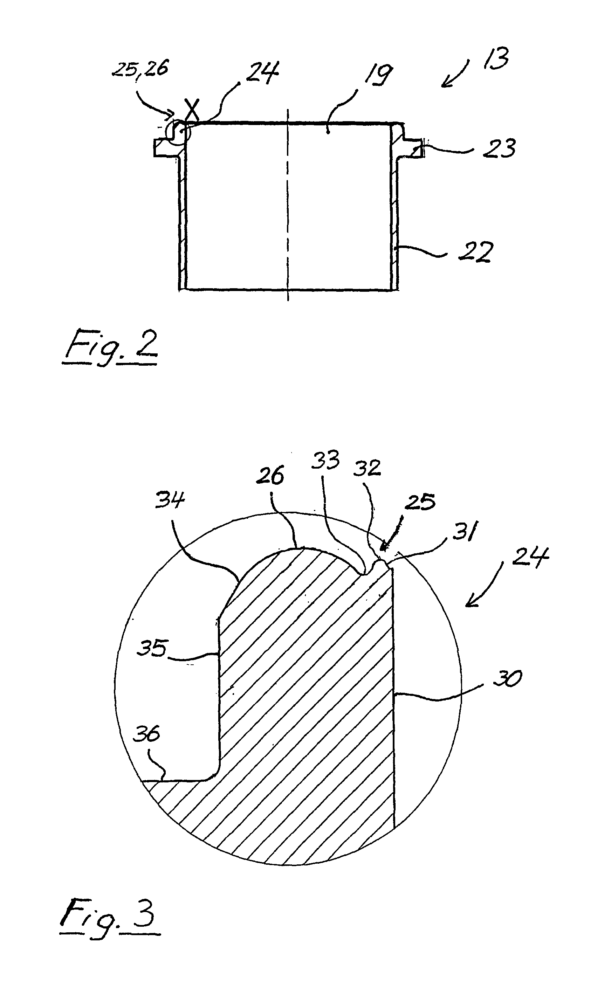

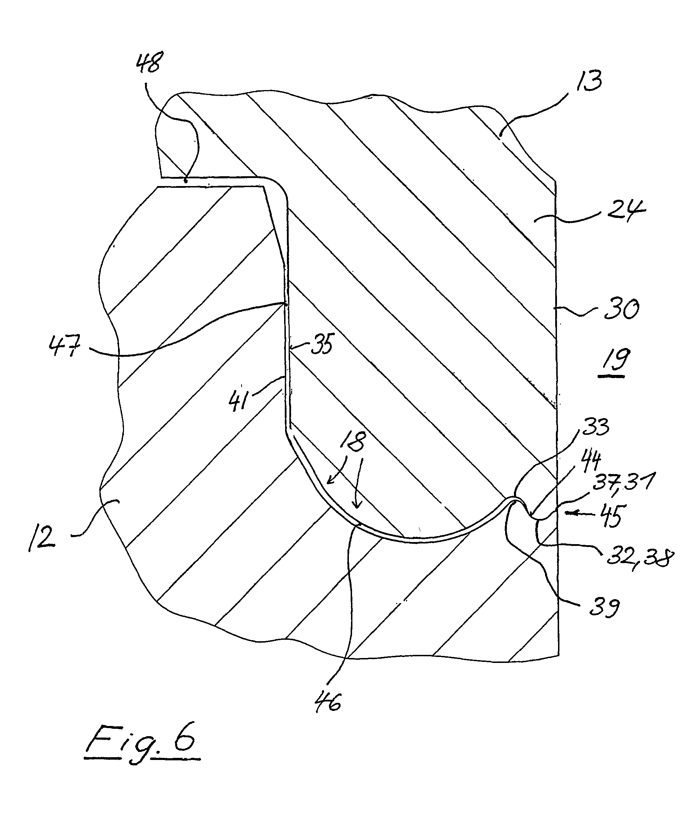

In Fig. 2 und 5 ist der Bundstutzen 13 separat dargestellt. Der Vorsprung 24 des Bundstutzens 13 weist eine profilierte Stirnfläche auf, an der die Dichtfläche 25 und die Reservedichtfläche des Bundstutzens 13 ausgebildet sind (Fig. 3).

Die Dichtfläche 25 hat ein gekrümmtes Profil nach Art einer S-Form. Dabei grenzt an die Medienraumwandung 30 zunächst eine Art Halb-Ausnehmung 31 an, die in eine wulstartige Erhöhung 32 übergeht. Die Erhöhung 32 wiederum geht an ihrer dem Medienraum 19 abgewandten Seite in eine nutartige Vertiefung 33 über. An die nutartige Vertiefung 33 grenzt die Reserve-Dichtfläche 26 an. Die Reserve-Dichtfläche 26 ist eine halbkreisförmige Erhöhung, die an ihrem dem Medienraum 19 abgewandten Ende in eine plan ausgebildete Einlaufschräge 34 übergeht. Die Abmessung der Reservedichtfläche 26 ist ca. 5- bis 10-mal größer als die Abmessung der Dichtfläche 25. An die Einlaufschräge 34 grenzt ein zur Medienraumwandung 35 axial gelegener Führungsabschnitt 36 des Vorsprungs 24 an, der in einen Radialabschnitt 37 des Flanschabschnittes 23 des Bundstutzens 13 übergeht.

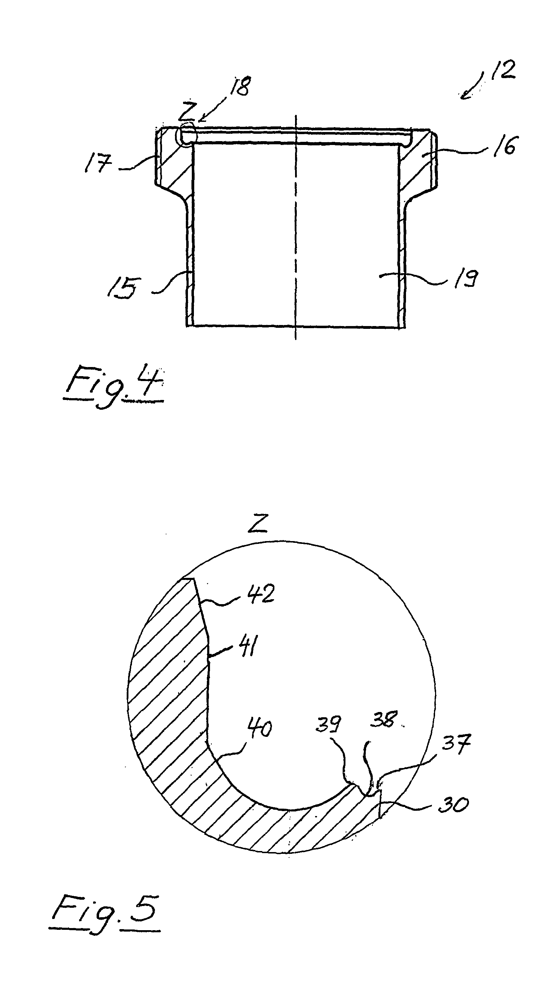

In der Fig. 4 ist der Gewindestutzen 12 separat dargestellt. Am Fuß des Einschnitts 18 sind zu der Dichtfläche 25 bzw. Reservedichtfläche 26 des Bundstutzens 13 komplementäre Dicht- bzw. Reserve-Dichtflächen 20, 21 des Gewindestutzens 12 ausgebildet (Fig. 5). Die Dichtfläche 20 hat ebenfalls ein S-förmiges Profil. Dabei grenzt an die Medienraumwandung 30 zunächst eine zur Halbausnehmung 31 des Bundstutzens 13 komplementäre Dichtlippe 37 an, die in eine nutartige Vertiefung 38, die zur wulstartigen Erhöhung 32 des Bundstutzens komplementär ist, übergeht. Die nutartige Vertiefung 38 geht an ihrem dem Medienraum 19 abgewandten Ende in eine zur nutartigen Vertiefung 33 am Bundstutzen komplementäre wulstartige Erhöhung 39 über. An die wulstförmige Erhöhung 39 grenzt die Reserve-Dichtfläche 21 an. Die Reserve-Dichtfläche 21 ist eine halbkreisförmige Vertiefung, die an ihrem dem Medienraum abgewandten Ende in eine plan ausgebildete Einlaufschräge 40 übergeht. Die Abmessung der Reserve-Dichtfläche 21 am Gewindestutzen 12 ist ebenfalls ca. 5- bis 10-mal größer als die Abmessung der Dichtfläche 20 am Gewindestutzen 12. An die Einlaufschräge 40 grenzt ein axial zur Medienraumwandung 30 gelegener Führungsabschnitt 41 des Einschnitts 18 an. Der Führungsabschnitt 41 geht an seinem der Reservedichtfläche 21 gegenüberliegenden Ende durch eine weitere Einlaufschräge 42 in einen Radialabschnitt 43 des Gewindeabschnittes 16 des Gewindestutzens 12 über.

Die Dichtflächen 20, 25 sowie die Reserve-Dichtflächen 21, 26 am Bund- bzw. Gewindestutzen 12, 13 werden durch einen Feindrehvorgang, beispielsweise durch Fein-Plandrehen, hergestellt. Dabei kann als spanabhebendes Werkzeug ein Wendeplättchen, beispielsweise aus Hartmetall, eingesetzt werden, das Schneiden mit der Kontur der S-förmigen Dichtfläche 20, 25 und der halbkreisförmigen Reserve-Dichtfläche 21, 26 besitzt und diese Kontur in die Stirnfläche des Vorsprungs 24 des Bundstutzens 13 und in den Fuß des Einschnitts 18 des Gewindestutzens 12 schneidet. Die zueinander komplementär profilierten Schneidplatten werden durch Profil-Schleifscheiben geformt.

Die Fig. 6 zeigt in den Einschnitt 18 des Gewindestutzens 12 eingreifenden Vorsprung 24 des Bundstutzens 13, wenn der Bundstutzen 13 und der Gewindestutzen 12 zusammengeführt werden. Dabei bildet sich eine unmittelbar an die Medienraumwandung 30 angrenzende Kontaktfläche 44 zwischen den Dichtflächen 20, 24 des Gewinde- bzw. Bundstutzens 13. Die Kontaktfläche 44 beginnt unmittelbar an der Schnittlinie zwischen der durch die beiden Dichtflächen 20, 25 gebildeten Dichtfuge 45 mit der Medienraumwandung 30. Dabei liegt die Dichtlippe 37 des Gewindestutzens 12 mit der komplementären Halb-Ausnehmung 31 des Bundstutzens 13 auf Anschlag. Auf Anschlag liegen ebenfalls die wulstartige Erhöhung 32 des Bundstutzens 13 und die dazu komplementäre nutartige Vertiefung 38 des Gewindestutzens 12 und bildet somit den zweiten Abschnitt der Kontaktfläche 44. Die nutartige Vertiefung 33 des Bundstutzens 13 und die wulstartige Erhöhung 39 des Gewindestutzens 12 liegen hingegen nicht vollständig auf Anschlag, sondern sind an ihren medienseitig abgewandten Flanken vom Medienraum 19 hinweg zunehmend beabstandet und bilden somit auch Reserve-Dichtflächen. Die Abmessung der Kontaktfläche 44 beträgt, beispielsweise bei einer Nennweite von 50 mm, ca. 0,1 mm.

Die halbkreisförmigen Reserve-Dichtflächen 21, 26 liegen nicht auf Anschlag, sondern bilden zwischen sich einen Ringspalt 46. Die Spaltbreite des Ringspaltes 46 beträgt beim beschriebenen Ausführungsbeispiel ca. 0,05 mm.

An den Ringspalt 46 schließt axial zur Medienraumwandung 30 gelegen, eine Trennfuge 47 an, die durch die beiden Führungsabschnitte 35, 41 des Gewinde- bzw. Bundstutzens 12, 13 gebildet wird. Die Spaltbreite der Trennfuge 47 liegt im Bereich der des Ringspaltes 46 oder etwas darunter.

An die Trennfuge 47 grenzt ein zur Medienraumwandung 30 senkrecht bzw. radial zum Rohr verlaufender Spalt 48 an, der zum Anspannen von Gewinde- und Bundstutzen 12, 13 dient. Die Spaltbreite dieses Spaltes 48 beträgt beispielsweise bei der Nennweite DN50 ca. 0,1 mm. Die Breiten des Vorsprungs 24 des Bundstutzens 13 und des Einschnittes 18 des Gewindestutzens 12 betragen, beispielsweise bei einer Nennweite von 50 mm, ca. 3 mm.

Nachfolgend wird ein weiteres Ausführungsbeispiel erläutert, das in den Zeichnungen nicht dargestellt ist. Die erfindungsgemäße Abdichtung kann beispielsweise zur Abdichtung von Ventilen eingesetzt werden. In der Steriltechnik werden beispielsweise die Ventilkolbenstangen von Kolbenventilen durch einen Faltenbalg zum Reaktionsgefäß hin weitgehend totraumfrei abgedichtet. Als Werkstoffe solcher Faltenbälge können Metalle oder auch Teflon (PTFE) eingesetzt werden. Der Faltenbalg wieder ist seinerseits an einem Sitz zur Ventilkolbenstange hin und am Gehäuse zur Umgebung hin abgedichtet. Bei Metallfaltenbälgen kann die Abdichtung am Sitz und am Gehäuse durch die erfindungsgemäße Abdichtung mittels zweier komplementärer Dichtflächen, also einer profilierten Dichtfläche an der Ventilkolbenstange bzw. einer profilierten Dichtfläche am Deckel des Gehäuses, vorgenommen werden. Auch die Abdichtung des Ventilkörpers im Ventilsitz kann entsprechend der Erfindung vorgenommen werden, wodurch sich ein gänzlich aus einem Werkstoff, z.B. rostfreiem Stahl aufgebautes Rohrleitungssystem herstellen läßt.

### FUNKTIONSBESCHREIBUNG

Bei der in den Figuren 1 bis 5 dargestellten Verschraubung 11 wird zunächst der Bundstutzen 13 auf den Gewindestutzen 12 gesteckt. Dabei wird der Vorsprung 24 an seinem Führungsabschnitt 35 vom Führungsabschnitt 41 des Gewindestutzens 12 geführt und in radialer Richtung vorzentriert. Beim weiteren Zusammenführen von Bund- und Gewindestutzen 12, 13 greifen die komplementär zueinander ausgebildeten, profilierten Dichtflächen 20, 25 ineinander, was eine weitere radiale Zentrierung bewirkt. Dadurch werden Beschädigungen der feinbearbeiteten Dichtflächen vermieden. Bund- und Gewindestutzen 12, 13 werden so lange zusammengeführt, bis die Dichtflächen 20, 25 an der Stirnseite des Vorsprunges 24 des Bundstutzens 13 und am Fuß des Einschnittes 18 des Gewindestutzens 12 auf Anschlag liegen. Die Dichtflächen 20, 25 bilden eine Kontaktfläche 44, die die Abdichtung zum Medienraum 19 hin bewirkt. Die Trennfuge 47 zwischen den Führungsabschnitten 35, 41 bewirkt, daß die beiden Dichtflächen 20, 25 sich paßgenau zueinander ausrichten können. Bei Beschädigungen oder Verformungen im vorderen Bereich der Dichtfuge 45 kann die Kontaktfläche 44 in radialer Richtung, weg vom Medienraum 19 wandern, sie kann sich also selbst nachstellen. Dazu trägt es bei, wenn die Dichtflächen so profiliert sind, daß sie sich zuerst im an den Medienraum angrenzenden Bereich kontaktieren, dort die Pressung also am größten ist.

Es kann sich auch eine Kontaktfläche zwischen den Reserve-Dichtflächen 21, 26 ausbilden. Sind die Dichtflächen 20, 25 auf Anschlag und haben sich ausgerichtet, kann mit dem Anspannen der Teile begonnen werden. Dazu wird das Innengewinde 28 der Überwurfmutter 14 auf das Außengewinde 17 des Gewindestutzens 12 geschraubt. Die Vorspannung wird dadurch eingestellt, daß der Spalt 28 zwischen den Radialabschnitten 36, 43 von Bund- und Gewindestutzen 13, 12 geschlossen wird. Dabei kann sich der Vorsprung 24 elastisch verformen. Die Dichtflächen 20, 25 sind so zueinander ausgerichtet, daß der maximale Kontaktdruck am Kontaktbereich zwischen Dichtlippe 37 und Halbausnehmung 31, also unmittelbar am Übergang zur Medienraumwandung 30, auftritt. Der Kontaktdruck liegt im beschriebenen Ausführungsbeispiel bei ca. 140 N/mm². Infolge des hohen Kontakt- bzw. Dichtdruckes und der bzgl. der Oberfläche und der radialen Ausrichtung hochgenauen und feinen Bearbeitung der Dichtflächen bildet sich eine insbesondere im an den Medienraum angrenzenden Bereich der Dichtfuge eine spaltfreie, also eigentlich fugenlose Verbindung. In Bezug auf die Rundheit der Teile kann eine gewisse Selbsteinstellung infolge der Profilierung der Dichtflächen erfolgen.

## Patentansprüche

1. Lösbare Abdichtung für medienführende Teile (12, 13), insbesondere für Aspektikanwendungen, mit einer einer Medienraumwandung (30) benachbarten Dichtung, die die Abdichtung abdichtet, wenn die Teile (12, 13) gegeneinander verspannt werden, wobei die Teile (12, 13), Dichtflächen (20, 25) aufweisen, die zur Bildung einer spaltfreien Dichtung unmittelbar aufeinander gepreßt sind, wobei die Kontaktfläche (44) zwischen den Dichtflächen (20, 25) auf einen, an den Medienraum (19) unmittelbar angrenzenden Bereich beschränkt ist, **dadurch gekennzeichnet, daß** die Dichtflächen (20, 25) zwei zueinander komplementäre, beim Spannen der Teile (12, 13) ineinander greifende S-oder trapezförmige P rofile a ufweisen u nd d er B ereich d er K ontaktfläche (44) eine Breite aufweist, die ein Fünfzigstel der Nennweite der Abdichtung, insbesondere 1 mm nicht überschreitet.

2. Abdichtung nach Anspruch 1, **dadurch gekennzeichnet, daß** die Breite der Kontaktfläche (44) ein Tausendstel bis ein Zweihunderfünfzigstel der Nennweite der Abdichtung, insbesondere 0,05 mm bis 0,2 mm beträgt.

3. Abdichtung nach Anspruch 1 oder 2, **dadurch gekennzeichnet, daß** die Kontaktfläche (44) mit einem spezifischen Dichtdruck belastet ist, der im elastischen Bereich des Materials der Teile (12, 13) liegt.

4. Abdichtung nach Anspruch 3, **dadurch gekennzeichnet, daß** der spezifische Dichtdruck im Bereich von ca. 20 % bis 80 % der Streckgrenze (R_{P0,2}) des Materials der Teile (12, 13), insbesondere zwischen 30 und 140 N./.mm² groß ist.

5. Abdichtung nach einem der vorhergehenden Ansprüche, **dadurch gekennzeichnet, daß** die Dichtflächen (20, 25) eine gegenseitige Führung quer zur Medienraumwandung (30) aufweisen.

6. Abdichtung nach einem der vorhergehenden Ansprüche, **dadurch gekennzeichnet, daß** die Dichtflächen (20, 25) so gestaltet sind, daß der spezifische Dichtdruck von der Schnittlinie der Dichtfuge (45) mit der Medienraumwandung (30) aus abnimmt, wobei vorzugsweise an die Kontaktfläche (44) als Reserve-Dichtflächen (21, 26) zur Verfügung stehende Flächenabschnitte an beide Teile angrenzen, die ebenfalls eine zueinander komplementäre Gestalt, insbesondere eine Krümmung, aufweisen.

7. Abdichtung nach Anspruch 6, **dadurch gekennzeichnet, daß** im Bereich der Reserve-Dichtflächen (21, 26) ein Ringspalt (46) in der Größenordnung von einem Fünftausendstel bis einem Fünfhundertstel, vorzugsweise drei Fünftausendstel bis sieben Fünftausendstel der Nennweite der Abdichtung vorgesehen ist.

8. Abdichtung nach einem der vorhergehenden Ansprüche, **dadurch gekennzeichnet, daß** an beiden Teilen (12, 13) quer im Abstand von den Dichtflächen (20, 25) Führungsabschnitte (35, 41) zur Vor-Zentrierung der beiden Teile vorgesehen sind, wobei an die Führungsabschnitte Einführschrägen (34, 40, 42) zum Zusammenführen der beiden Teile angrenzen und zwischen den Führungsabschnitten (35, 41) eine Trennfuge (47) ausgebildet ist, durch die sich die beiden Teile vor dem Gegeneinanderpressen der Dichtflächen (20, 25) zueinander ausrichten.

9. Abdichtung nach einem der vorhergehenden Ansprüche, **dadurch gekennzeichnet, daß** die Kontaktfläche (44) so gestaltet ist, daß die Medienraumwandungen (30) beider Teile (12, 13) an der Dichtfuge (45) vorsprungsfrei fluchten.

10. Abdichtung nach einem der vorhergehenden Ansprüche, **dadurch gekennzeichnet, daß** die an die Medienraumwandung (30) angrenzende Kontaktfläche (44) in einem Bereich der Dichtfuge (45) liegt, in der die Dichtfläche (20) eines der Teile eine auf das andere Teil zu vorspringende Dichtlippe (37) aufweist, die in einer entsprechenden Halb-Ausnehmung (31) an der Dichtfläche (25) des anderen Teils aufgenommen ist.

11. Abdichtung nach einem der vorhergehenden Ansprüche, **dadurch gekennzeichnet, daß** der Dichtdruck durch eine anschlagbegrenzte Spanneinrichtung (50) vorgegeben ist.

12. Abdichtung nach einem der vorhergehenden Ansprüche, **dadurch gekennzeichnet, daß** zwischen den Teilen in Spannrichtung Anschlagflächen mit einem Spalt (48) zwischen sich vorgesehen sind, dessen Spaltbreite so groß ist, daß bei einem Anspannen der Abdichtung bis zum Schließen des Spaltes (48) der Dichtdruck durch elastische Verformung der Teile aufgebaut wird, wobei die Spaltbreite vorzugsweise ca. ein Fünftausendstel bis ein Hundertstel, vorzugsweise ein Hundertstel bis drei Hundertstel der Nennweite der Verbindung beträgt.

13. Abdichtung nach einem der vorhergehenden Ansprüche, **dadurch gekennzeichnet, daß** zwischen einer die Verspannung der Teile bewirkenden Spanneinrichtung (50) und den Dichtflächen (20, 25) zumindest ein einer elastischen Verformung unterliegender Abschnitt der Teile zwischengeschaltet ist.

14. Abdichtung nach Anspruch 13, **dadurch gekennzeichnet, daß** der Abschnitt durch wenigstens einen ring- oder rohrförmigen Vorsprung (24) zwischen Spanneinrichtung (50) und Dichtfläche (20, 25) gebildet ist.

15. Abdichtung nach einem der vorhergehenden Ansprüche, **dadurch gekennzeichnet, daß** die Abdichtung eine Anschluß-Verbindung zwischen zwei medienführenden Teilen ist.

16. Abdichtung nach einem der vorhergehenden Ansprüche, **dadurch gekennzeichnet, daß** die Teile (12, 13) aus einem harten Werkstoff bestehen, wobei die Teile jeweils aus einem gleich harten Werkstoff sind.

17. Verfahren zur Herstellung einer Abdichtung nach einem der vorhergehenden Ansprüche, **dadurch gekennzeichnet, daß** die Dichtflächen (20, 25) durch Profil-Feindrehen mittels zueinander komplementärer Profilschneiden hergestellt werden.

18. Verfahren nach Anspruch 17, **dadurch gekennzeichnet, daß** auch die Reserve-Dichtflächen (21, 26) gleichzeitig mit den gleichen Profilschneiden hergestellt werden.

## Claims

1. Detachable sealing system for media-carrying parts (12, 13), particularly for aseptic conditions, with a seal adjacent to the media area wall (30) and which seals the sealing system if the parts (12, 13) are braced against one another, said parts (12, 13) having sealing surfaces (20, 25), which are directly pressed onto one another for forming a clearance-free seal, the contact surface (44) between the sealing surfaces (20, 25) being restricted to an area immediately adjacent to the media area (19), **characterized in that** the sealing surfaces (20, 25) have two complimentary S-shaped or trapezoidal profiles engaging in one another on tensioning the parts (12, 13) and the area of the contact surface (44) has a width not exceeding 1/50 of the nominal width of the sealing system and which in particular does not exceed 1 mm.

2. Sealing system according to claim 1, **characterized in that** the width of the contact surface (44) is 1/1000 to 1/250 of the nominal width of the sealing system and is in particular 0.05 mm to 0.2 mm.

3. Sealing system according to claim 1 or 2, **characterized in that** the contact surface (44) is loaded with a specific sealing pressure, which is in the elastic range of the material of the parts (12, 13).

4. Sealing system according to claim 3, **characterized in that** the specific sealing pressure is in the range of approximately 20 to 80% of the yield point (R_{p0.2}) of the material of the parts (12, 13) and is in particular between 30 and 140 N/mm².

5. Sealing system according to one of the preceding claims, **characterized in that** the sealing surfaces (20, 25) have a mutual guidance transversely to the media area wall (30).

6. Sealing system according to one of the preceding claims, **characterized in that** the sealing surfaces (20, 25) are designed in such a way that the specific sealing pressure decreases from the intersection line of the sealing gap (45) with the media area wall (30) and preferably surface portions available as reserve sealing surfaces (21, 26) at the contact surface (44) are adjacent to both parts, which also have a complimentary design, particularly a curvature.

7. Sealing system according to claim 6, **characterized in that** in the vicinity of the reserve sealing surfaces (21, 26) is provided an annular clearance (46) with a size of 1/5000 to 1/500, preferably 3/5000 to 7/5000 of the nominal width of the sealing system.

8. Sealing system according to one of the preceding claims, **characterized in that** on both parts (12, 13) are provided transversely and spaced from the sealing surfaces (20, 25), guide sections (35, 41) for the precentring of the two parts and at the guide sections are provided insertion bevels (34, 40, 42) for bringing together the two parts and between the guide sections (35, 41) a separating gap (47) is formed, through which there is a mutual alignment of the two parts before the sealing surfaces (20, 25) are pressed together.

9. Sealing system according to one of the preceding claims, **characterized in that** the contact surface (44) is designed in such a way that the media area walls (30) of both parts (12, 13) are aligned in projection-free manner at the sealing gap (45).

10. Sealing system according to one of the preceding claims, **characterized in that** the contact surface (44) adjacent to the media area wall (30) is in an area of the sealing gap (45), where the sealing surface (20) of one of the parts has a sealing lip (37) projecting towards the other part and which is received in a corresponding half-recess (31) on the sealing surface (25) of the other part.

11. Sealing system according to one of the preceding claims, **characterized in that** the sealing pressure is predetermined by a stop-limited clamping device (50).

12. Sealing system according to one of the preceding claims, **characterized in that** between the parts are provided in the clamping direction stop faces with a clearance (48) between them and whose width is sufficiently great that on bracing the sealing system up to the closing of the clearance (48) the sealing pressure is built up by the elastic deformation of the parts, the clearance width preferably being approximately 1/5000 to 1/100 , preferably 1/100 to 3/100 of the nominal width of the connection.

13. Sealing system according to one of the preceding claims, **characterized in that** between a clamping device (50) bringing about the bracing of the parts and the sealing surfaces (20, 25) is interposed at least one portion of the parts subject to elastic deformation.

14. Sealing system according to claim 13, **characterized in that** the portion is formed by at least one annular or tubular projection (24) between the clamping device (50) and the sealing surface (20, 25).

15. Sealing system according to one of the preceding claims, **characterized in that** the sealing system is a joint connection between two media-carrying parts.

16. Sealing system according to one of the preceding claims, **characterized in that** the parts (12, 13) are made from a hard material, the parts being in each case made from an equally hard material.

17. Method for the manufacture of a sealing system according to one of the preceding claims, **characterized in that** the sealing surfaces (20, 25) are produced by profile precision turning by means of mutually complimentary profile cutting edges.

18. Method according to claim 17, **characterized in that** the reserve sealing surfaces (21, 26) are produced simultaneously using the same profile cutting edges.

## Revendications

1. Joint amovible pour composants conducteurs de milieux (12, 13), notamment pour des applications aseptiques, avec une garniture voisine d'une paroi de la chambre contenant le milieu (30), qui colmate la garniture quand les composants (12, 13) sont serrés l'un contre l'autre, les composants (12, 13) présentant des surfaces d'étanchéité (20, 25) pressées l'une sur l'autre pour former une garniture sans interstice, la surface de contact (44) entre les surfaces d'étanchéité (20, 25) étant limitée à une zone directement limitrophe de la chambre contenant le milieu (19), **caractérisé en ce que** les surfaces d'étanchéité (20, 25) présentent deux profils en forme de S ou de trapèze complémentaires entre eux et s'engageant l'un dans l'autre lors du serrage des composants (12, 13), et que la zone de la surface de contact (44) présente une largeur qui ne dépasse pas un cinquantième de la largeur nominale du joint, en particulier 1 mm.

2. Joint selon la revendication 1, **caractérisé en ce que** la largeur de la surface de contact (44) se situe entre un millième et un deux-cent-cinquantième de la largeur nominale du joint, en particulier entre 0,05 et 0,2 mm.

3. Joint selon la revendication 1 ou 2, **caractérisé en ce que** la surface de contact (44) est soumise à une pression de colmatage spécifique qui se situe dans la plage élastique du matériau des composants (12, 13).

4. Joint selon la revendication 3, **caractérisé en ce que** la pression de colmatage spécifique se situe dans la plage comprise entre environ 20 et 80 % de la limite d'élasticité du matériau des composants (12, 13), en particulier entre 30 et 140 N/mm².

5. Joint selon l'une des revendications précédentes, **caractérisé en ce que** les surfaces d'étanchéité (20, 25) présentent des guidages conjugués dans le sens transversal par rapport à la paroi de la chambre contenant le milieu (30).

6. Joint selon l'une des revendications précédentes, **caractérisé en ce que** les surfaces d'étanchéité (20, 25) sont conçues de sorte que la pression de colmatage spécifique diminue à partir de la ligne d'intersection de la jointure (45) avec la paroi de la chambre contenant le milieu (30), sachant que les sections de surface disponibles sur la surface de contact (44) comme surfaces d'étanchéité de réserve (21, 26) sont de préférence adjacentes aux deux composants, et présentent également des formes complémentaires l'une par rapport à l'autre, en particulier une courbure.

7. Joint selon la revendication 6, **caractérisé en ce qu'**est prévu dans la zone des surfaces d'étanchéité de réserve (21, 26) un interstice annulaire (46) de l'ordre de grandeur d'un cinq-millième à un cinq-centième, de préférence de trois cinq-millièmes à sept cinq-millièmes de la largeur nominale du joint.

8. Joint selon l'une des revendications précédentes, **caractérisé en ce que** sur les deux composants (12, 13) sont prévues transversalement et à une certaine distance des surfaces d'étanchéité (20, 25) des sections de guidage (35, 41) destinées à pré-centrer les deux composants, sachant que les sections de guidage sont prolongées par des biseaux d'insertion (34, 40, 42) destinés à l'assemblage des deux composants, et qu'est formée entre les sections de guidage (35, 41) une ligne de joint (47) grâce à laquelle les deux composants s'ajustent entre eux avant la compression des surfaces d'étanchéité (20, 25) l'une contre l'autre.

9. Joint selon l'une des revendications précédentes, **caractérisé en ce que** la surface de contact (44) est conçue de sorte que les parois des chambres contenant le milieu (30) des deux composants (12, 13) s'alignent sur la jointure (45) sans faire saillie.

10. Joint selon l'une des revendications précédentes, **caractérisé en ce que** la surface de contact (44) adjacente à la paroi de la chambre contenant le milieu (30) se trouve dans une zone de la jointure (45) dans laquelle la surface d'étanchéité (20) d'un composant présente une lèvre d'étanchéité (37) faisant saillie vers l'autre composant et qui se loge dans un demi-creux (31) sur la surface d'étanchéité (25) de l'autre composant.

11. Joint selon l'une des revendications précédentes, **caractérisé en ce que** la pression de colmatage est prédéfinie par un dispositif de serrage (50) limité par une butée.

12. Joint selon l'une des revendications précédentes, **caractérisé en ce qu'**entre les composants sont prévues dans le sens de serrage des surfaces de butée avec un interstice (48) entre elles, dont la largeur est telle que, lors d'un serrage du joint jusqu'à la fermeture de l'interstice (48), la pression de colmatage est établie par déformation élastique des composants, la largeur de l'interstice se situant entre environ un cinq-millième et un centième, de préférence entre un centième et trois centièmes de la largeur nominale de l'assemblage.

13. Joint selon l'une des revendications précédentes, **caractérisé en ce qu'**entre un dispositif dé serrage (50) ayant pour effet de serrer les composants et les surfaces d'étanchéité (20, 25) est intercalée ou moins une section des composants susceptible de subir une déformation élastique.

14. Joint selon la revendication 13, **caractérisé en ce que** la section est formée par au moins par une saillie annulaire ou tubulaire (24) entre le dispositif de serrage (50) et les surfaces d'étanchéité (20, 25).

15. Joint selon l'une des revendications précédentes, **caractérisé en ce que** le joint est un raccord établissant la liaison entre deux composants conducteurs de milieux.

16. Joint selon l'une des revendications précédentes, **caractérisé en ce que** les composants (12, 13) sont constitués d'un matériau dur, chaque composant étant constitué du même matériau dur.

17. Procédé de fabrication d'un joint selon l'une des revendications précédentes, **caractérisé en ce que** les surfaces d'étanchéité (20, 25) sont confectionnées par tournage de précision de profils avec des fraises à profiler complémentaires l'une par rapport à l'autre.

18. Procédé selon la revendication 17, **caractérisé en ce que** les surface d'étanchéité de réserve (21, 26) sont aussi confectionnées en même temps avec les mêmes fraises à profiler.
